# EUROPÄISCHE PATENTSCHRIFT

(11) **EP 1 006 643 B1**
(45) Veröffentlichungstag und Bekanntmachung des Hinweises auf die Patenterteilung: **10.05.2006**
(21) Anmeldenummer: 99811016.7
(22) Anmeldetag: 05.11.1999
(51) Int. Cl.: H02K 9/08

(54) **Generatorkühlung mit Kühlernachlaufmischung**
Generator cooling system with return refrigerant mixing
Système de refroidissement pour générateur avec mélange du réfrigérant de retour

(30) Priorität: 03.12.1998 DE 19856455
(43) Veröffentlichungstag der Anmeldung: 07.06.2000
(73) Patentinhaber: Alstom Technology Ltd, 5400 Baden (CH)
(72) Erfinder: Glahn, Joern Axel, Dr., Vernon, CT 06066 (US); Baumgartner, Josef, 6026 Rain (CH); Jung, Michael, Dr., 79761 Waldshut (DE)

(56) Entgegenhaltungen:
- EP-A- 0 299 908
- DE-A- 19 645 272
- DE-B- 1 058 619
- DE-C- 868 176
- US-A- 2 427 702
- US-A- 2 650 994
- US-A- 4 071 791

## Beschreibung

### TECHNISCHES GEBIET

Die vorliegende Erfindung bezieht sich auf das Gebiet der stromerzeugenden Generatoren. Sie betrifft einen Generator mit einem Kühlsystem, welches von den wärmeerzeugenden Elementen des Generators erhitztes Kühlmedium aus dem Generator ansaugt und das heisse Kühlmedium zu wenigstens zwei parallel arbeitenden Kühlaggregaten leitet, und bei welchem die Kühlaggregate das Kühlmedium abkühlen, bevor es wiederum zu den wärmeerzeugenden Elementen des Generators geleitet wird. Dabei sind Mittel vorgesehen, welche die aus verschiedenen Kühlaggregaten strömenden Kühlmediumströme nach Austritt aus den Kühlaggregaten und vor Zuleitung zu den wärmeerzeugenden Elementen des Generators miteinander vermischen, und wobei das Mischen der aus verschiedenen Kühlaggregaten strömenden Kühlmediumströme in einem in der Strömungsrichtung des Kühlmediums hinter den Kühlaggregaten und vor den wärmeerzeugenden Elementen des Generators gelegenen Ausgleichsraum stattfindet, und in diesem Ausgleichsraum durch starre Leitbleche erfolgt, welche die verschiedenen Kühlmediumströme ablenken und wobei der Generator über eine Mehrzahl von parallel arbeitenden Kühlaggregaten verfügt, welche an ihren Seiten wenigstens mittelbar aneinandergrenzen und das aus jeweils benachbarten Kühlaggregaten strömende Kühlmedium vermischt wird.

### STAND DER TECHNIK

Bei Generatoren stellt sich im allgemeinen das Problem, dass die am Kühlmedium verrichtete Ventilationsarbeit, die Rotoroberflächenreibung und insbesondere die elektrischen Verluste in den Leiterwicklungen und Statorblechen zu einer grossen Wärmeentwicklung führen. Dies erfordert eine effiziente Kühlung der zentralen Bauteile des Generators.

Bei den heute immer weiter verbreiteten Hochleistungsgeneratoren, steigen gerade die Ventilationsverluste aufgrund der steigenden Umfangsgeschwindigkeiten an, was eine sorgfältige Konstruktion der Kühlsysteme unabdingbar macht. Normalerweise wird bei solchen Kühlsystemen ein Kühlmedium, meist Luft oder ein anderes Gas, in speziellen Fällen auch flüssige Medien, in einem Kühlkreislauf durch den Generator getrieben. Die an den heissen Bauteilen des Generators auftretende Wärme wird durch das Kühlmedium abtransportiert und an einer anderen Stelle im Kühlkreislauf über Kühlaggregate dem Kühlmedium wieder entzogen.

Bei Generatoren, welche nach dem Saugkühlprinzip betrieben werden, wird zum Beispiel das von den wärmeerzeugenden Elementen des Generators erhitzte Kühlmedium aus dem Generator von an der Rotorwelle befestigten Hauptventilatoren angesaugt. Normalerweise sind diese Hauptventilatoren stirnseitig und rückseitig des Generators angeordnet, und ein Kanalsystem leitet das von den Hauptventilatoren ausgeblasene Kühlmedium durch Kühlkanäle zu einer Kühlanordnung, welche meist unter dem Generator, in einer Fundamentgrube, liegt. Dem Kühlmedium wird anschliessend beim Durchströmen der sich im wesentlichen über die ganze Länge des Generators erstreckenden und aus mehreren parallel arbeitenden Kühlaggregaten zusammengesetzten Kühlanordnung Wärme entzogen. Das kalte Medium tritt daraufhin in kanalisierter Weise auf der ganzen Länge wieder in das Innere des Generators zu den wärmeerzeugenden Elementen, einen geschlossenen Kühlkreislauf bildend.

Um den heutigen Anforderungen der Kühlung in Grenzleistungsmaschinen gerecht zu werden , sind sehr effiziente Kühlungen mit kleinen Strömungsverlusten und grossem Wirkungsgrad notwendig. Es ist insbesondere im Sinne der Betriebssicherheit und der Vermeidung von Schäden an den Bauteilen darauf zu achten, dass das Kühlsystem möglichst störungsunempfindlich ist. Dies wird beispielsweise dadurch erreicht, dass anstelle eines einzigen grossen Kühlaggregates mehrere parallel nebeneinander arbeitende Aggregate in den Kühlmedienstrom eingebaut werden (s. bspw. DE 19645272 A1). Der Ausfall eines Kühlaggregats kann so durch andere Aggregate zumindest teilweise aufgefangen werden und eine Zerstörung der Bauteile durch Überhitzung kann weitgehend vermieden werden.

Bei modernen Generatoren kann selbst die Verwendung von mehreren parallel arbeitenden Kühlaggregaten nicht verhindern, dass schon beim Ausfall von einem Aggregat Bauteile Schaden nehmen. Fällt nämlich ein Kühlaggregat aus, so bilden sich in Strömungsrichtung hinter dem ausgefallenen Aggregat sofort Heissgassträhnen, welche innerhalb kürzester Zeit dazu führen, dass die kritischen Materialtemperaturen der davon überstrichenen Bauteile überschritten werden. Ganz besonders kritisch ist die Situation beim Ausfall von Randkühlern, da bei diesen sofort starke und weitgehend isolierte Heissgassträhnen entstehen.

Die EP 0299908 A1 versucht diese Nachteile dadurch zu überwinden, dass stromab der Kühlaggregate kastenförmige Leitelemente (vgl. Fig. 5 und 6) angeordnet sind. Dadurch wird der Kühlmedienstrom in der Längsachse der Maschine in zwei Teilströme aufgeteilt, welche jeweils zum entgegengesetzten Maschinenende geleitet werden. Erst dort kann dann eine Vermischung des aus den verschiedenen Kühlaggregaten stammenden Kühlmediums erfolgen.

### DARSTELLUNG DER ERFINDUNG

Der Erfindung liegt demnach die Aufgabe zugrunde, Mittel zur Verfügung zu stellen, welche die Kühlwirkung beim Ausfall von einzelnen Kühlern weiter verbessern, dabei keine grosse Veränderung der konventionell verwendeten Kühlsysteme notwendig machen und keine nennenswerten Druckverluste erzeugen.

Diese Aufgabe wird bei einem Generator der eingangs genannten Art dadurch gelöst, dass die Ablenkung der Kühlmediumströme benachbarter Kühlaggregate durch Leitbleche derart erfolgt, dass die Kühlmediumströme mit einem Wirbel versehen miteinander vermischt werden, und dass im Ausgleichsraum wenigstens zwei Leitbleche angeordnet sind, welche von den aneinandergrenzenden Seiten der benachbarten Kühlaggregate ausgehend sägezahnartig ineinandergreifend in abwechselnd nach der Seite des einen und des anderen benachbarten Kühlaggregates geneigter Weise bis zu einer Deckenhöhe über der Austrittsfläche der Kühlaggregate gezogen sind, so dass der Ausgleichsraum in einen Verteilraum und einen Mischraum unterteilt wird.

Dabei liegt der Verteilraum in Kühlmediumströmungsrichtung unmittelbar hinter den Kühlaggregaten und der Mischraum ist in Kühlmediumströmungsrichtung unmittelbar hinter dem Verteilraum angeordnet. Beim Fluss vom Verteilraum zu den wärmeerzeugenden Elementen des Generators werden infolgedessen die Kühlmediumströme benachbarter Kühlaggregate im Mischraum durch die Ablenkung an den Leitblechen wirbelbehaftet vermischt. Ausserdem ergibt sich ein weiterer Vorteil daraus, dass die Teilströme durch diese Führung einander entgegenlaufen, was bei einem Ausfall eines Aggregates optimalen Wärmetausch zwischen ungekühlt heissem und gekühltem Kühlmediumstrom durch Gegenlaufkühlung zur Folge hat.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: Schematische Darstellung eines Generators mit Saugkühlprinzip und Mischung des Kühlmediums im Ausgleichsraum;
- Fig. 2: Perspektivische Ansicht eines Ausschnitts eines Ausgleichsraums mit Leitblechen;
- Fig. 3: Aufsicht eines Ausgleichsraums mit seitlicher Aneinanderreihung von Leitblechen;
- Fig. 4: Aufsicht mehrerer aneinandergereihter Kühlaggregate mit Leitblechen;

### WEGE ZUR AUSFÜHRUNG DER ERFINDUNG

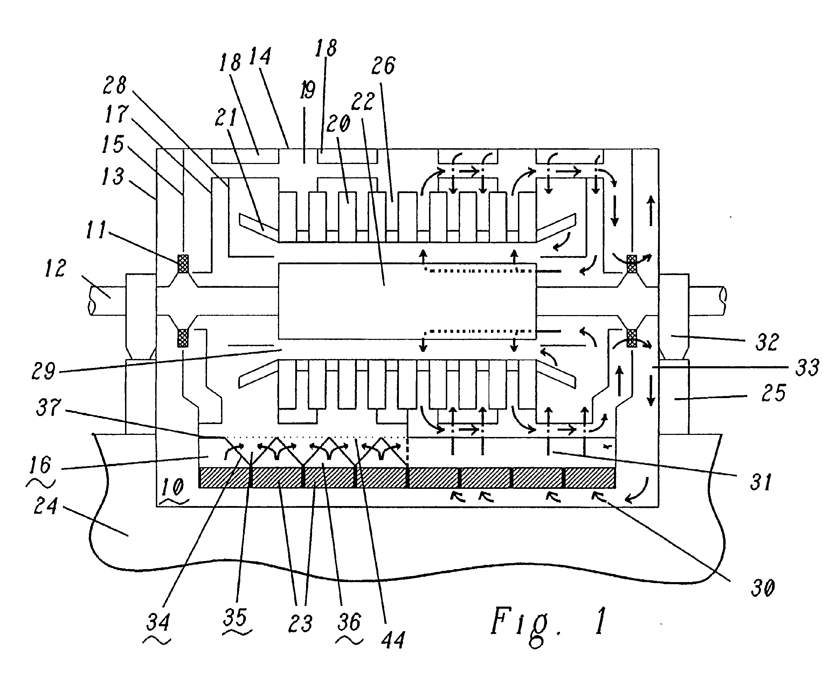

Figur 1 zeigt einen schematischen Längsschnitt durch einen im Saugkühlprinzip betriebenen Generator. Der Generator ist stirnseitig und rückseitig von Maschinengehäusedeckeln 13 begrenzt und längs von einem im wesentlichen zylindrischen Maschinengehäuse 14 umfasst. Das Gehäuse umfasst einen aus Teilblechkörpern 20 gebildeten Statorblechkörper, in welchem radiale Belüftungsschlitze 26 zwischen den verschiedenen Teilblechkörpern 20 vorhanden sind. Ein Rotor 22 befindet sich im Zentrum des Statorblechkörpers und die zugehörige Rotorwelle 12 ist in Lagerböcken 32 gelagert, welche auf Konsolen 25 aufliegen, die auf einem Fundament 24 stehen.

Das Fundament 24 weist eine Fundamentgrube 10 auf, die sich axial über die ganze Länge des Maschinengehäuses 14 erstreckt und im wesentlichen die gesamte Breite des Maschinengehäuses 14 einnimmt. In dieser Fundamentgrube 10 ist eine Kühlanordnung bestehend aus mehreren Kühlaggregaten 23 angebracht. Dabei stehen die Eintrittsöffnungen der Kühlaggregate 23 mit Ausströmräumen von beiderseits des Rotors 22 angeordneten Hauptventilatoren 11 in Verbindung und die Austrittsöffnungen der Kühlaggregate 23 münden in einen Ausgleichsraum 16. Der Hauptventilator 11 ist mit der Rotorwelle 12 fest verbunden und dreht sich mit der gleichen Geschwindigkeit wie der Rotor 22.

Die Strömungswege von durch einen Generator strömendem Kühlgas ist im rechten Teil der Figur 1 mit Pfeilen angedeutet. Bei diesem Kühlprinzip handelt es sich um eine sogenannte Revers- oder Saugkühlung, bei der Heissgas 30, mittels Ventilatoren 11 den Kühlaggregaten 23 zugeführt wird. In Strömungsrichtung hinter den Kühlaggregaten 23 verteilt sich der kalte Kühlgasstrom 31 hinter dem Ausgleichsraum 16 auf die Kaltgaskammem 18, wobei sich Teilströmungen ausbilden. Ein erster Teilstrom strömt zwischen Leitblechen 28 und einer Innenverschalung 17 direkt zum Rotor 22, ein zweiter strömt durch den Wickelkopf 21 in den Maschinenluftspalt 29 zwischen Rotor und Stator, und ein dritter Kühlgasstrom gelangt durch die Kaltgaskammern 18 und Belüftungsschlitze 26 in den Maschinenluftspalt 29. Aus dem Maschinenluftspalt 29 wird der Kühlgasstrom von den Hauptventilatoren 11 durch Belüftungsschlitze 26 und die Heissgaskammern 19 zwischen eine Innenverschalung 17 und eine Aussenverschalung 15 gesaugt. Anschliessend wird die vom Hauptventilator 11 angetriebene Luft umgelenkt und durch das Kühlkanalgehäuse 33 in die Fundamentgrube 10 zur den Kühlaggregaten 23 geführt. Es ist nun leicht nachzuvollziehen, dass sich z.B. beim Ausfall des randseitigen Kühlaggregats der Wickelkopf 21 schnell erhitzt weil sich gerade dort eine Heissgassträhne ausbildet.

In der linken Hälfte der Figur 1 ist im Ausgleichsraum 16 angedeutet, wie Leitbleche 34 über den verschiedenen Kühlaggregaten 23 im Ausgleichsraum 16 angeordnet werden können. Der Ausgleichsraum 16 wird durch die Leitbleche 34 in Verteilräume 36 und in Mischräume 35 aufgeteilt, und die Leitbleche 34 bilden dabei eine in seitlicher Ansicht im wesentlichen zickzackförmige Wand, wobei die Leitbleche 34 jedoch Verteilraum 36 und Mischraum 35 nicht voneinander trennen, sondern senkrecht zur Schnittebene der Figur 1 segementweise sägezahnartig ineinander greifen und ein Durchströmen des Mediums erlauben.

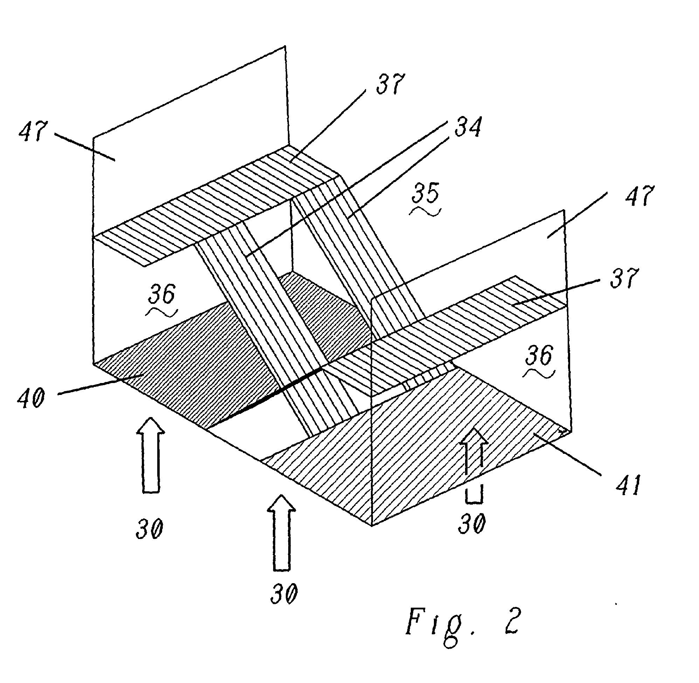

Figur 2 zeigt eine perspektivische Ansicht der Anordnung der Leitbleche 34 im Ausgleichsraum für zwei nebeneinander angeordnete Kühlaggregate. Erkennbar ist das geneigt sägezahnartige Ineinandergreifen der Leitbleche 34. Angenommen das eine 40 der Kühlaggregate 23 ist nicht mehr funktionstüchtig, während das benachbarte 41 noch arbeitet, so strömt heisse Luft aus dem Aggregat 40 und kalte Luft aus dem Aggregat 41. Infolge die Leitbleche 34 vermischen sich kalter und heisser Kühlmediumstrom nun gegenläufig und wirbelbehaftet beim Durchtreten durch die Schlitze zwischen den Leitblechen 34. In der in Figur 2 abgebildeten Situation von zwei nebeneinander angeordneten Kühlaggregaten 23 erweist es sich als vorteilhaft, das Abströmverhalten des Kühlmediums an den Seiten besonders zu beeinflussen durch die Verwendung von Deckblechen 37. Solche Deckbleche 37 werden auf der Dekkenhöhe 44, auf welcher sich die den Kühlaggregaten 23 abgewandten Seiten der Leitbleche 34 treffen, an die Seitenwände 47 angrenzend und parallel zu den Austrittsflächen der Kühlaggregate 23 eingezogen. Die Deckbleche 37 stossen dadurch an die oberen Kanten der zu ihnen geneigten Leitbleche 34 und stellen sicher, dass das ganze, aus dem darunterliegenden Kühlaggregat 23 strömende Kühlmedium mit dem aus dem benachbarten Aggregat strömenden Medium vermischt wird und dass sich bei Ausfall eines Aggregates keine randseitigen Strähnen mit heissem Kühlmedium bilden können.

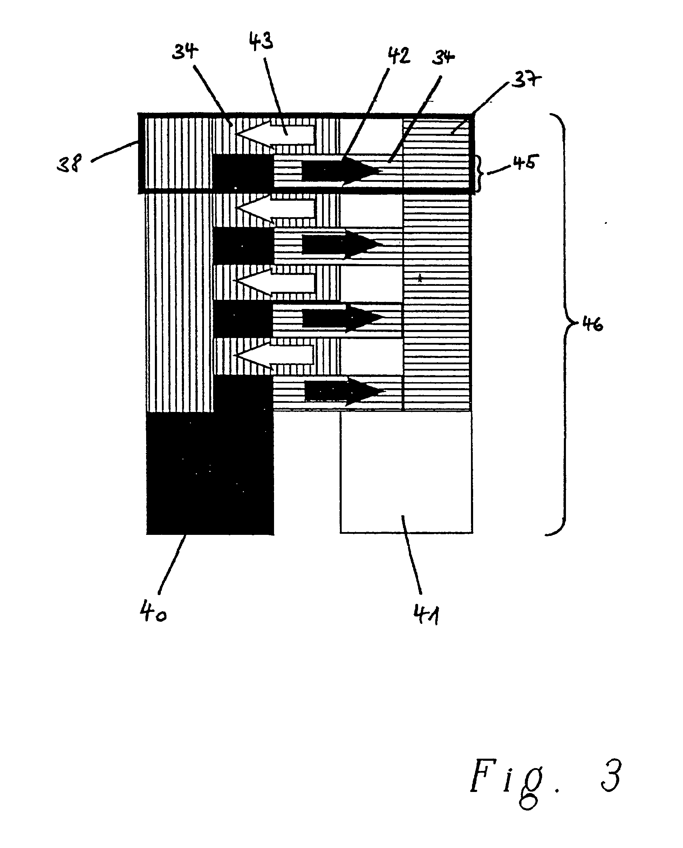

Figur 3 zeigt die Situation von Figur 2 in einer Aufsicht. Auch in diesem Fall wird angenommen, dass das schwarze Kühlaggregat 40 nicht funktionstüchtig ist, während das andere Kühlaggregat 41 einwandfrei funktioniert. Die aus dem fehlerhaften Aggregat 40 strömende heisse Luft 42 ist mit schwarzen Pfeilen angedeutet, die gekühlte Luft aus dem funktionstüchtigen Aggregat 41 ist mit weissen Pfeilen 43 angegeben. In der Aufsicht ist das gegenläufige Mischen der Ströme 42 und 43 klar erkennbar. Die Gegenläufigkeit führt zu einem optimalen gegenseitigen Wärmeaustausch und Vermischung der beiden Ströme 42 und 43. Die Leitbleche 34 können entsprechend der Breite 46 der Aggregate 23 wechselseitig aneinandergereiht werden. Je nach Bedürfnissen können z.B. aus zwei gegenläufigen Leitblechen 34 bestehende Mischerzellen 38 modular aneinandergereiht werden. Im Prinzip kann das Verhältnis der Breite 46 der Kühlaggregate 23 und der Mischerzellen 38 frei gewählt werden, es zeigt sich aber, dass ein Verhältnis der Leitblechbreite 45 zur Aggregatbreite 46 von 1/10 bis 1/15 besonders vorteilhaft ist. Wird ausserdem die Neigung der Leitbleche 34 zur Austrittsfläche der Kühlaggregate 23 auf 25°-30° eingestellt und eine Gesamthöhe des Ausgleichsraums 16 (zwischen Austrittsebene der Kühlaggregate und der Fundamentgrubenoberkante) von 1-1.5m erlaubt, so resultiert eine optimale Strömung und Vermischung der Kühlluft.

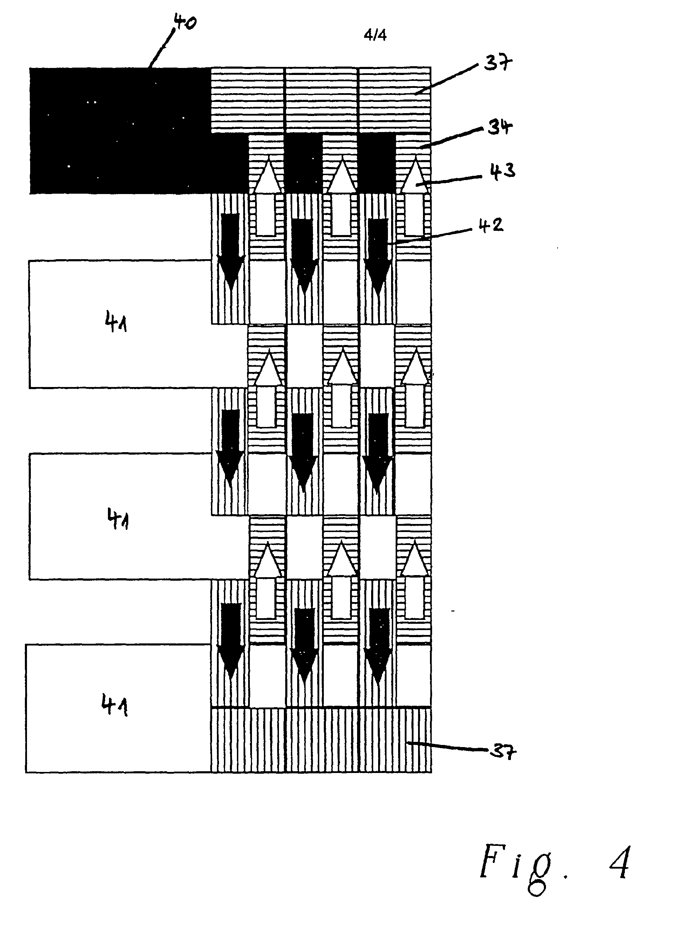

Figur 4 zeigt in einer Aufsicht, wie das obige Kühlmediummischkonzept auch auf eine Mehrzahl von nebeneinander angeordneten Kühlaggregaten 23 angewendet werden kann. Dabei werden die Leitbleche 34 zu nebeneinander liegenden Aggregaten 23 einfach übergreifend ineinandergreifend aneinandergeordnet. So wird die Luft, die aus einem Aggregat strömt, welches mit zwei weiteren Aggregaten benachbart ist, mit der Luft von beiden benachbarten Aggregaten vermischt. Wiederum ist es zur Vermeidung von den besonders kritischen randseitigen Heissluftsträhnen notwendig, dass bei den randseitigen Kühlern Deckbleche 37 eingezogen werden.

Andere Anordnungen von Leitblechen als die im obigen Ausführungsbeispiel beschriebene sind selbstverständlich möglich. So ist es beispielsweise denkbar, die Leitbleche auch zusätzlich noch seitlich abzukippen oder sie nicht eben, sondern in strömungsgünstiger Form zu strukturieren.

### BEZEICHNUNGSLISTE

- 10: Fundamentgrube
- 11: Hauptventilator
- 12: Rotorwelle
- 13: Gehäusedeckel
- 14: zylindrisches Maschinengehäuse
- 15: Aussenverschalung
- 16: Ausgleichsraum
- 17: Innenverschalung
- 18: Kaltgaskammer
- 19: Heissgaskammer
- 20: Teilblechkörper
- 21: Wickelkopf
- 22: Rotor
- 23: Kühlanordnung
- 24: Fundament
- 25: Konsole
- 26: Belüftungsschlitze
- 28: Inneres Leitblech
- 29: Maschinenluftspalt
- 30: Heissluft vor 23
- 31: Kaltluft nach 23
- 32: Lagerbock
- 33: Kühlkanal
- 34: Leitblech
- 35: Mischraum
- 36: Verteilraum
- 37: Deckblech
- 38: Mischerzelle
- 40: Ausgefallenes Kühlaggregat
- 41: Funktionstüchtiges Kühlaggregat
- 42: Heissluft aus 40
- 43: Kaltluft aus 41
- 44: Deckenhöhe
- 45: Breite von 34
- 46: Breite von 41

## Patentansprüche

1. Generator mit einem Kühlsystem, welches von den wärmeerzeugenden Elementen des Generators erhitztes Kühlmedium aus dem Generator ansaugt und das heisse Kühlmedium zu wenigstens zwei parallel arbeitenden Kühlaggregaten (23) leitet, welche Kühlaggregate (23) das Kühlmedium abkühlen bevor es wiederum zu den wärmeerzeugenden Elementen des Generators geleitet wird, wobei Mittel (34,37) vorgesehen sind, welche die aus verschiedenen Kühlaggregaten (23) strömenden Kühlmediumströme (31) nach Austritt aus den Kühlaggregaten (23) und vor Zuleitung zu den wärmeerzeugenden Elementen des Generators miteinander vermischen, und wobei das Mischen der aus verschiedenen Kühlaggregaten (23) strömenden Kühlmediumströme (31) in einem in der Strömungsrichtung des Kühlmediums hinter den Kühlaggregaten (23) und vor den wärmeerzeugenden Elementen des Generators gelegenen Ausgleichsraum (16) stattfindet, und in diesem Ausgleichsraum (16) durch starre Leitbleche (34) erfolgt, welche die verschiedenen Kühlmediumströme ablenken und wobei der Generator über eine Mehrzahl von parallel arbeitenden Kühlaggregaten (23) verfügt, welche an ihren Seiten wenigstens mittelbar aneinandergrenzen und das aus jeweils benachbarten Kühlaggregaten (23) strömende Kühlmedium vermischt wird, **dadurch gekennzeichnet, dass**
die Ablenkung der Kühlmediumströme benachbarter Kühlaggregate (23) durch Leitbleche (34) derart erfolgt, dass die Kühlmediumströme mit einem Wirbel versehen miteinander vermischt werden, und dass im Ausgleichsraum (16) wenigstens zwei Leitbleche (34) angeordnet sind, welche von den aneinandergrenzenden Seiten der benachbarten Kühlaggregate (23) ausgehend sägezahnartig ineinandergreifend in abwechselnd nach der Seite des einen und des anderen benachbarten Kühlaggregates (23) geneigter Weise bis zu einer Deckenhöhe (44) über der Austrittsfläche der Kühlaggregate (23) gezogen sind, so dass der Ausgleichsraum (16) in einen Verteilraum (36) und einen Mischraum (35) unterteilt wird.

2. Generator nach Anspruch 1, **dadurch gekennzeichnet, dass** das Kühlsystem nach dem Saugkühlprinzip arbeitet, bei welchem ein an einer Rotorwelle (12) angebrachter Hauptventilator (11) das von den wärmeerzeugenden Elementen des Generators erhitzte Kühlmedium ansaugt und anschliessend zu den Kühlaggregaten (23) treibt.

3. Generator nach Anspruch 1, **dadurch gekennzeichnet, dass** die Kühlaggregate (23) in einer Fundamentgrube (10) angeordnet sind, welche den Generator teilweise aufnimmt.

4. Generator nach Anspruch 3, **dadurch gekennzeichnet**, sich die Kühlaggregate (23) im wesentlichen über die Breite der Fundamentgrube (10) erstrecken.

5. Generator nach Anspruch 1, **dadurch gekennzeichnet, dass** der Verteilraum (36) in Kühlmediumströmungsrichtung unmittelbar hinter den Kühlaggregaten (23) liegt, und der Mischraum (35) in Kühlmediumströmungsrichtung unmittelbar hinter dem Verteilraum (36) angeordnet ist, und der Kühlmediumstrom benachbarter Kühlaggregate (23) beim Fluss vom Verteilraum (36) zu den wärmeerzeugenden Elementen des Generators im Mischraum (35) durch die Ablenkung an den Leitblechen (34) wirbelbehaftet vermischt wird.

6. Generator nach Anspruch 5, **dadurch gekennzeichnet, dass** die Leitbleche (34) derart geneigt und ausgebildet sind, dass sie jeweils von der Seite des angrenzenden benachbarten Kühlaggregats (23) ausgehend die Deckenhöhe (44) im wesentlichen über der Mitte des nächsten Kühlaggregats (23) treffen.

7. Generator nach Anspruch 6, **dadurch gekennzeichnet, dass** im Ausgleichsraum (16) über den in axialer Richtung des Generators aussenliegenden und damit randseitigen Kühlaggregaten (23) zusätzliche Deckbleche (37) eingezogen sind, welche parallel zur Austrittsfläche der Kühlaggregate (23) ausgerichtet auf der Deckenhöhe (44) liegen, sich über die ganze Breite der Kühlaggregate (23) erstrecken und welche so breit sind, dass sie an die von der Seite des benachbarten Kühlaggregats (23) ausgehenden Leitbleche angrenzen.

8. Generator nach den Ansprüchen 3 und 6, **dadurch gekennzeichnet, dass** die Höhe zwischen der Austrittsfläche der Kühlaggregate (23) und der Oberkante der Fundamentgrube (10) in einem Bereich von 1-1.5m liegt, dass die Leitbleche (34) relativ zur Ebene der Austrittsfläche der Kühlaggregate (23) einen Winkel von 25°-30° einschliessen, und dass die quer zur Generatorhauptachse (12) gemessene Breite (45) aller Leitbleche (34) gleich ist und 1/10 bis 1/15 der gesamten Breite (46) der Kühlaggregate (23) ausmacht.

## Claims

1. Generator with a cooling system which draws in, from the generator, cooling medium heated by the heat-generating elements of the generator and which guides the hot cooling medium to at least two cooling units (23), which cooling units (23) operate in parallel and cool the cooling medium before it is led back to the heat-generating elements of the generator, wherein means (34, 37) are provided which mix together the cooling medium flows (31) flowing from different cooling units (23) after they emerge from the cooling units (23) and before they are supplied to the heat-generating elements of the generator, the mixing of the cooling medium flows (31) flowing from different cooling units (23) occurring in an equalizing space (16) located, in the flow direction of the cooling medium, behind the cooling units (23) and before the heat-generating elements of the generator, and taking place in this equalizing space (16) by means of rigid guide plates (34) which deflect the various cooling medium flows, and the generator having available a plurality of cooling units (23), which operate in parallel and, at least indirectly, adjoin one another at their sides, and the cooling medium flowing from respectively adjacent cooling units (23) being mixed, **characterized in that** the deflection of the cooling medium flows of adjacent cooling units (23) is carried out by means of guide plates (34) in such a way that the cooling medium flows are provided with a vortex when they are mixed together, and that at least two guide plates (34) are arranged in the equalizing space (16) which - starting from the sides adjoining one another of the adjacent cooling units (23) - are extended to a ceiling level (44) above the outlet surface of the cooling units (23) in such a way that they engage in one another in saw-tooth fashion in an alternating manner inclined towards the side of the one and of the other adjacent cooling unit (23), so that the equalizing space (16) is subdivided into a distribution space (36) and a mixing space (35).

2. Generator according to Claim 1, **characterized in that** the cooling system operates on the suction cooling principle, in which a main fan (11) attached to a rotor shaft (12) draws in the cooling medium heated by the heat-generating elements of the generator and then drives it to the cooling units (23).

3. Generator according to Claim 1, **characterized in that** the cooling units (23) are arranged in a foundation pit (10) which partially accommodates the generator.

4. Generator according to Claim 3, **characterized in that** the cooling units (23) essentially extend over the width of the foundation pit (10).

5. Generator according to Claim 1, **characterized in that** the distribution space (36) is located directly behind the cooling units (23) in the flow direction of the cooling medium and the mixing space (35) is arranged immediately behind the distribution space (36) in the flow direction of the cooling medium, and the cooling medium flow of adjacent cooling units (23) is mixed, in the mixing space (35), by the deflection at the guide plates (34) in such a way that it is subjected to vortices when flowing from the distribution space (36) to the heat-generating elements of the generator.

6. Generator according to Claim 5, **characterized in that** the guide plates (34) are inclined and configured in such a way that, respectively starting from the side of the adjoining adjacent cooling unit (23), they meet the ceiling level (44) essentially above the centre of the next cooling unit (23).

7. Generator according to Claim 6, **characterized in that** in the equalizing space (16), additional cover plates (37) extend in the axial direction of the generator at the outside and therefore boundary-end cooling units (23), which cover plates (37) are located at the ceiling level (44) aligned parallel with the outlet surface of the cooling units (23), extend over the complete width of the cooling units (23) and which are so wide that they adjoin the guide plates which start from the side of the adjacent cooling unit (23).

8. Generator according to Claims 3 and 6, **characterized in that** the height between the outlet surface of the cooling units (23) and the upper edge of the foundation pit (10) is located in a range between 1 and 1.5 m, **in that** the guide plates (34) enclose an angle of between 25 and 30º relative to the plane of the outlet surface of the cooling units (23), and **in that** the width (45), measured transverse to the main axis of the generator (12), of all the guide plates (34) is the same and amounts to between 1/10 and 1/15 of the total width (46) of the cooling units (23).

## Revendications

1. Générateur comportant un système de refroidissement, lequel aspire à l'extérieur du générateur le milieu de refroidissement chauffé par les éléments producteurs de chaleur du générateur et guide le milieu de refroidissement chaud vers au moins deux unités réfrigérantes (23) fonctionnant en parallèle, lesquelles unités réfrigérantes (23) refroidissent le milieu de refroidissement avant qu'il soit à nouveau guidé vers les éléments producteurs de chaleur du générateur, moyennant quoi des moyens (34, 37) sont prévus, lesquels mélangent les uns aux autres les courants de milieu de refroidissement (31) s'écoulant des différentes unités réfrigérantes (23) après qu'ils soient sortis des unités réfrigérantes (23) et avant qu'ils soient introduits dans les éléments producteurs de chaleur du générateur et moyennant quoi le mélange des courants de milieu de refroidissement (31) s'écoulant des différentes unités réfrigérantes (23) a lieu dans une chambre de compensation (16) située dans le sens d'écoulement du milieu de refroidissement après les unités réfrigérantes (23) et avant les éléments producteurs de chaleur du générateur et est effectué dans cette chambre de compensation (16) par des déflecteurs (34) rigides, lesquels dévient les différents courants de milieu de refroidissement et moyennant quoi le générateur dispose d'une pluralité d'unités réfrigérantes (23) fonctionnant en parallèle, lesquelles sont au moins indirectement contiguës par leurs côtés et le milieu de refroidissement d'écoulant des unités réfrigérantes (23) adjacentes respectives est mélangé, **caractérisé en ce que**
la déviation des courants de milieu de refroidissement d'unités réfrigérantes (23) adjacentes est effectuée par des déflecteurs (34) de telle sorte que les courants de milieu de refroidissement soient mélangés les uns aux autres par un tourbillon et **en ce que**, dans la chambre de compensation (16), au moins deux déflecteurs (34) sont disposés, lesquels sont amenés à s'emboîter l'un dans l'autre en dents de scie à partir des côtés contigus des unités réfrigérantes adjacentes (23) en alternance du côté de l'une et de l'autre unité réfrigérante (23) adjacente de manière inclinée jusqu'à une hauteur de couvercle (44) sur la surface de sortie de l'unité réfrigérante (23), de telle sorte que la chambre de compensation (16) soit divisée en une chambre de répartition (36) et une chambre de mélange (35).

2. Générateur selon la revendication 1, **caractérisé en ce que** le système de refroidissement fonctionne selon le principe de refroidissement par aspiration, dans lequel un ventilateur principal (11) monté sur un arbre de rotor (12) aspire le milieu de refroidissement chauffé par les éléments producteurs de chaleur du générateur et l'entraîne ensuite vers les unités réfrigérantes (23).

3. Générateur selon la revendication 1, **caractérisé en ce que** les unités réfrigérantes (23) sont disposées dans une fosse de fondation (10), laquelle renferme partiellement le générateur.

4. Générateur selon la revendication 3, **caractérisé en ce que** les unités réfrigérantes (23) s'étendent essentiellement sur la largeur de la fosse de fondation (10).

5. Générateur selon la revendication 1, **caractérisé en ce que** la chambre de répartition (36) est située directement derrière les unités réfrigérantes (23) dans le sens d'écoulement du milieu de refroidissement et la chambre de mélange (35) est disposée directement derrière la chambre de répartition (36) dans le sens d'écoulement du milieu de refroidissement et le courant de milieu de refroidissement des unités réfrigérantes (23) adjacentes est mélangé au moyen d'un tourbillon dans la chambre de mélange (35) par la déviation sur les déflecteurs (34) lorsqu'il s'écoule de la chambre de répartition (36) vers les éléments producteurs de chaleur du générateur.

6. Générateur selon la revendication 5, **caractérisé en ce que** les déflecteurs (34) sont inclinés et configurés de telle sorte qu'ils se rencontrent respectivement du côté de l'unité réfrigérante (23) adjacente contiguë à partir de la hauteur de couvercle (44) essentiellement au milieu de l'unité réfrigérante (23) suivante.

7. Générateur selon la revendication 6, **caractérisé en ce que**, dans la chambre de compensation (16), des tôles de couvercle (37) supplémentaires sont placées sur les unités réfrigérantes (23) situées à l'extérieur et donc sur les bords dans la direction axiale du générateur, lesquelles sont orientées parallèlement à la surface de sortie des unités réfrigérantes (23) sur la hauteur de couvercle (44), s'étendent sur toute la largeur des unités réfrigérantes (23) et sont assez larges pour être contiguës aux déflecteurs sortant du côté de l'unité réfrigérante (23) adjacente.

8. Générateur selon les revendications 3 et 6, **caractérisé en ce que** la hauteur entre la surface de sortie des unités réfrigérantes (23) et l'arête supérieure de la fosse de fondation (10) est comprise entre 1 et 1,5 m, **en ce que** les déflecteurs (34) forment un angle de 25°-30° par rapport au plan de la surface de sortie des unités réfrigérantes (23) et **en ce que** la largeur (45) de tous les déflecteurs (34) mesurée transversalement à l'axe principal du générateur (12) est identique et correspond à 1/10 à 1/15 de la largeur totale (46) des unités réfrigérantes (23).
